## Europäisches Patentamt
## European Patent Office
## Office européen des brevets

(11) Publication number: **0 216 002**
A2

# (12) EUROPEAN PATENT APPLICATION

(21) Application number: 86103144.1

(22) Date of filing: 08.03.86

(51) Int. Cl.⁴: **B 03 B 9/00**
C 01 F 11/18, C 09 C 1/02

(30) Priority: 17.05.85 US 735022

(43) Date of publication of application:
01.04.87 Bulletin 87/14

(84) Designated Contracting States:
AT DE FR GB IT

(71) Applicant: GEORGIA KAOLIN COMPANY, INC.
2700 U.S. Highway 22 East
Union New Jersey 07083(US)

(72) Inventor: Shiftlet, Wayne Merle
1136 Craddock Way
Macon Georgia 31210(US)

(74) Representative: Gross, Gernot K.
Kleiberweg 5
D-6200 Wiesbaden(DE)

(54) Process for beneficiating natural calcite ores.

(57) A slurry (3) of ground calcite ore in water is subjected to a froth flotation (30) wherein acid insoluble impurities are removed. The flotation process is enhanced by a two-stage pre-flotation conditioning accomplished by adding an acetate salt of a tall oil based imidazoline (5) to the slurry (3) and then mixing a nonpolar hydrocarbon oil (7) into the imidazoline treated slurry. The purified underflow calcium carbonate slurry (11) from the froth flotation is first dewatered to a solids content of 80% to 90% by weight, then reslurried with a dispersing agent (40) and subjected at a solids content of at least 75% by weight to a multi-stage media grinding process (60, 70, 80) wherein each grinding stage is charged with progressively finer grinding media. After degritting, the ground calcium carbonate slurry (17) is ready for shipment as a paper filler-grade product slurry (19) without further dewatering. Alternatively, the product slurry (19) may be passed through an additional fine media grinding stage (100) to produce a paper coating-grade product slurry (21) also ready for shipment without further dewatering.

# PROCESS FOR BENEFICIATING NATURAL CALCITE ORES

## BACKGROUND OF THE INVENTION

The present invention relates generally to the preparation of paper coatings and fillers and, more particularly, to a process for beneficiating natural calcium carbonate ores to produce a high solids filler grade and/or a high solids coating grade product.

Beneficiated calcium carbonate has been widely used as a filler in the manufacture of paper and also as a coating material for paper. In either application, commercial considerations dictate that the beneficiated calcium carbonate product be in the form of a high solids aqueous slurry having high brightness and low abrasiveness.

Various processes have been developed over the years for beneficiating naturally occurring calcite ore, i.e. calcium carbonate, in order to improve the brightness thereof by removing discoloring impurities from the ore. A number of these proposals involve a flotation step to remove impurities from ore liberated by grinding the ore prior to the flotation step.

One such process is disclosed in U.S. Patent 3,980,240 wherein naturally occurring calcite ore is first wet milled to produce a coarse-milled calcite slurry wherein no more than 1% of the particles are +325 mesh, and then further wet-milled prior to flotation to produce a fine-milled calcite slurry wherein at least 70% of the particles are less than 2 microns. The fine-milled calcite slurry is then subjected to a flotation process and to a high density magnetic field separation to remove the discoloring impurities therefrom.

Additional calcite ore beneficiation processes using flotation to remove discoloration impurities are disclosed in U.S. Patent 4,165,840 and 4,293,097. In each of these processes, naturally occurring calcite ore is milled to produce a coarse-milled calcite product wherein no more than 5% by weight of the particles are +325 mesh and no more than 35% by weight of the particles are less than 2 microns in equivalent spherical diameter. This coarse-milled calcite is then subjected to a froth flotation as an aqueous slurry including less than 40% solids to remove discoloration impurities. The purified underflow from the froth flotation step is then dewatered to at least 60% solids and wet-milled to produce an output product, a beneficiated calcite slurry wherein at least 80% by weight of the particles therein have an equivalent spherical diameter less than 2 microns.

U.S. Patent 4,293,097 further discloses conducting the froth flotation separation by using as a collector agent therein a 1-substituted-1-alkyl imidazoline or salt derivative thereof in conjunction with a promoter comprising a substantially nonpolar aliphatic compound having from 10 to 20 carbon atoms in its longest straight chain. U.S. Patent 3,990,966 also discloses using a flotation agent to enhance the separation of pyrite impurities from a calcite ore, the flotation agent comprising a cationic surfactant selected from the group consisting of 1-hydroxyethyl-2-heptadecenyl glyoxalidine and 1-hydroxyethyl-2-alkylimidazolines or salt derivatives thereof, wherein the alkyl portion of the imidazoline is the alkyl portion of a fatty acid.

In commercial application as a paper filler, the beneficiated calcium carbonate product slurry should have a solids content of at least 72% by weight, a brightness of at least 95, and an Einlehner abrasiveness number in the range of 18 to 23. For commercial application as a paper coating, the beneficiated calcium carbonate product slurry should have a solids content of at least 76% by weight, a brightness of at least 95, and an Einlehner absrasiveness number in the range of 12 to 15. Additionally, it is commercially desirable that the particle size distribution be as uniform as possible.

Accordingly, it is an object of the present invention to provide a process for beneficiating naturally occurring calcite ore to produce a beneficiated calcite slurry for paper filler applications having a solids content of at least 75% by weight and wherein at least 30% by weight of the particles have an equivalent spherical diameter less than 1 micron.

It is a further object of the present invention to provide a process for beneficiating naturally occurring calcite ore to produce a beneficiated calcite slurry for paper coating applications having a solids content of at least 75% by weight and wherein at least 65% by weight of the particles have an equivalent spherical diameter less than 1 micron.

It is also an object of the present invention to provide a process meeting the foregoing objectives which enables the purified calcite slurry underflow from the flotation to be subjected to a wet-grinding process at a solids content of at least 75% by weight thereby avoiding any subsequent dewatering operations to produce a shippable product.

It is a still further object of the present invention to provide a process meeting the foregoing objectives wherein the post-flotation grinding of the purified calcite slurry is carried out in such a manner so as to produce a beneficiated calcite product having a relatively narrow particle size distribution and a low abrasiveness.

SUMMARY OF THE INVENTION

A naturally occurring calcite ore containing acid insoluble discoloration impurities such as tremolite, feldspar, and quartz, in amounts up to 10% by weight of the calcite ore, is beneficiated via froth flotation and multi-stage media grinding. In accordance with the present invention, a slurry of ground calcite ore in water, having a particle size range of 90% to 100% minus 100 mesh and preferably having a solids content in the range of 40% to 50% solids by weight, is subjected to a froth flotation wherein acid insoluble impurities are removed therefrom with the froth. The purified underflow calcite slurry, typically containing less than 0.1% by weight of acid insoluble impurities, is first dewatered to a solids content of at least 75% by weight, treated with a dispersing agent, and then subjected to a multi-stage media grinding process at a solids content of at least 75% by weight to produce a product calcite slurry wherein at least 30% by weight (sedimentation basis) of the solids therein have an equivalent spherical diameter less than one micron. After screening to remove any grit, i.e. particles in excess of 400 mesh, such as worn grinding media produced in the grinding process, the product calcite slurry is ready for shipment at a solids content of at least 75% without any dewatering. Alternatively, the degritted calcite slurry may be passed through an additional media grinding stage charged with fine media to produce a beneficiated calcite product slurry ready for shipment at a solids content of at least 75% by weight with at least 65% by weight (sedimentation basis) of the solids therein have an equivalent spherical diameter less than one micron.

In beneficiating a calcite slurry in accordance with the process of the present invention, the underflow purified calcite slurry from the flotation step is passed in series through a plurality of media grinding stages charged with progressively finer grinding media. That is, the upstream-most grinding stage is charged with grinding media having the relatively largest particle size, the downstream-most grinding stage is charged with grinding media having the relatively smallest particle size, and each intermediate grinding stage is charged with a grinding media having a particle size finer than the particle size of the grinding media of the preceding upstream grinding stage. Additionally, if the degritted calcite slurry is to be subjected to further media grinding, such as when producing a product slurry for paper coating applications, the grinding media of the post-degritting grinding stage should have a particle size at least as fine as the grinding media of the last grinding stage preceding the degritting screening.

In a preferred embodiment of the present invention, the high solids multi-stage grinding of the purified calcite underflow slurry from the flotation step is enhanced by first dewatering the underflow slurry to a solids content in the range of 80% to 90% by weight and then slurrying the dewatered slurry to a solids content in the range of 75% to 78% by weight by adding an aqueous solution of a dispersing agent to the dewatered slurry. Preferably, the aqueous solution of a dispersing agent comprises a solution of a water-soluble polyacrylate dispersant which is added to the slurry at a dosage rate of 10 to 30 pounds of dry polyacrylate per ton of dry calcium carbonate.

In a further preferred embodiment of the present invention, the effectiveness of the flotation step is enhanced so as to advantageously permit flotation of the ground calcite slurry at a solids content of at least 40% by weight and, more preferably, in the range of 45% to 50% by weight, by subjecting the ground calcite slurry to a two-stage conditioning step prior to flotation. Pre-flotation conditioning of the ground calcite slurry in accordance with this aspect of the present invention is accomplished by first adding an acetate salt of a tall oil based imidazoline to the aqueous slurry of ground calcite ore, and then mixing a nonpolar hydrocarbon oil, such as kerosene, into the imidazoline treated calcite ore slurry and stirring sufficiently to thoroughly condition the calcite slurry prior to flotation.

By practice of the present invention, a shippable filler grade calcite slurry may be produced having a solids content of at least 75% by weight wherein at least 30% by weight (sedimentation basis) of the solids have an equivalent spherical diameter less than one micron, or a shippable coating grade calcite slurry may be produced having a solids content of at least 75% by weight wherein at least 65% by weight (sedimentation basis) of the solids have an equivalent spherical diameter less than one micron.

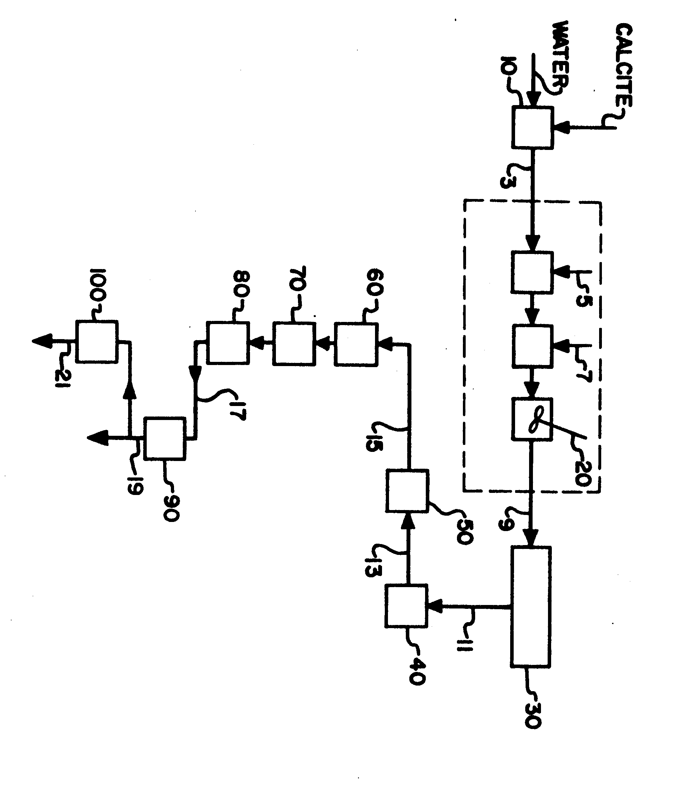

BRIEF DESCRIPTION OF THE DRAWING

A more thorough discussion of the present invention is presented hereinafter with reference to the single figure of drawing illustrating in schematic form a preferred process for beneficiating naturally occurring calcite ore in accordance with the present invention.

DESCRIPTION OF A PREFERRED EMBODIMENT

Naturally occurring calcite ores consist not only of calcium carbonate, but also various undesirable acid insoluble minerals, including feldspar, quartz, tremolite and mica. These impurities are undesired as they "discolor" the ore, i.e. reduce the whiteness or brightness of the calcium carbonate, and therefore must be removed in order to utilize naturally occurring calcium carbonate for applications such as paper fillers and paper coatings. Although such impurities typically comprise about 3% to 5% by weight of the calcite ore, deposits are known wherein the impurities constitute 15% or more by weight of the calcite ore.

To beneficiate such a calcite ore to improve its brightness in accordance with the present invention, a slurry 3 of ground calcite ore in water is prepared with the ground calcite ore having a particle size distribution of 90% to 100% minus 100 mesh, i.e. less than 150 microns, and, preferably, with approximately 50% of the particles therein being plus 325 mesh, i.e. a median particle size about 45 microns. The ground calcite ore may be prepared by either dry or wet grinding naturally occurring calcite ore. If prepared through dry grinding, the vessel 10 comprises a slurrifier wherein a feed stream of previously ground calcite ore is mixed with water. If prepared through wet grinding, the vessel 10 comprises a wet grinder, such as a wet ball mill, wherein a feed stream of crushed calcite ore is mixed with water and ground therein to produce the desired slurry. In both cases, the aqueous ground calcite slurry 3 preferably has a solids content in the range of 45% to 50%. A higher solids content is preferred in the aqueous calcite slurry 3 as processing at a higher solids content facilitates subsequent dewatering.

The aqueous calcite slurry 3 is subjected to a flotation step in a commercially available flotation cell 30 to separate a substantial portion of the aforementioned acid insoluble impurities from the calcite slurry. The acid insoluble impurities are collected in the froth of the flotation and thus separated from the calcium carbonate which is concentrated in the flotation underflow. In accordance with one aspect of the present invention, the aqueous slurry 3 of ground calcite, having a particle size distribution of 90% to 100% minus 100 mesh, is subjected to a two-step conditioning process prior to flotation in the flotation cell 30.

In the two-step conditioning process of the present invention, an acetate salt of tall oil based imidazoline 5 was first added to the aqueous slurry 3 of ground calcite ore prior to adding a nonpolar hydrocarbon oil 7, such as kerosene, to the imidazoline treated aqueous slurry of calcite ore. The so-treated aqueous slurry of calcite ore is then stirred by a mixing means 20 to sufficiently agitate the calcite slurry with the added acetate salt of tall oil based imidazoline 5 and kerosene 7 to thoroughly condition the calcite slurry prior to flotation.

The conditioned aqueous calcite ore slurry 9 is subjected to a froth flotation in a flotation cell 30 in a conventional manner, preferably at a slurry solids content greater than 40% by weight and, more preferably, at a slurry solids content in the range of 45% to 50% by weight. In the flotation cell, a substantial portion of the acid insoluble impurities in the naturally occurring calcite ore separate therefrom and collect in the froth while the calcite ore itself is concentrated in the underflow 11 of the flotation cell 30. Typically, a naturally occurring calcite ore, ground and conditioned prior to flotation as hereinbefore described will be purified to well under the commercially acceptable level of 0.5% acid insolubles with an ore recovery greater than 90% achieved.

For example, bench scale tests were carried out in the laboratory according to the process hereinbefore described to purify 31 different drill core composties of naturally occurring calcite ore from a mine site in Canada. The amount of acid insolubles in these drill core composites ranged from as low as 1.29% to as high as 17.27%. Of these 31 ore samples, 25 were purified to less than 0.2% acid insolubles with 21 of these being purified to less than 0.1% acid insolubles. Although 5 of these 31 samples show little or no purification during these pilot plant studies, the overall results obtained clearly evidence the effectiveness in removing impurities of the process of the present invention wherein a slurry of calcite ore is formed having solids within a specified particle size range, conditioned prior to flotation as hereinbefore described, and subjected to flotation at a slurry solids content greater than 40% solids by weight.

The underflow slurry 11 of purified calcium carbonate from the flotation cell 30 is first dewatered to a solids content of at least 75% by weight and treated with a dispersing agent prior to further beneficiation in accordance with the present invention by a staged media grinding process. In the preferred embodiment of the present invention, the underflow slurry 11 from the flotation cell 30 is passed to dewatering means 40, such as a conventional vacuum filter apparatus, wherein in the slurry is dewatered to a solids content in the range of 80% to 90% by weight. The dewatered slurry 13 is then prepared for grinding by adding a dispersing solution to the dewatered slurry in vessel 50 thereby forming a redispersed calcium carbonate slurry 15 at a solids content ranging from 75% to 78% by weight. Preferably, the dispersing solution comprises an aqueous solution of a water-soluble polyacrylate such as sodium polyacrylate which is added to the dewatered slurry 13 at a dosage rate of about 10 to about 30 pounds of dry polyacrylate dispersant per ton of dry calcium carbonate.

Although the grinding process of the present invention as to be described hereinafter may be carried out by directly dewatering the underflow slurry 11 to the 75% to 78% solids range, it has been found that better control of the solids cotent of the redispersed slurry can be achieved by first dewatering the slurry to its natural cake solids, typically 80% to 90% solids, and then reslurrying by adding the required amount of water in the aqueous dispersing solution to provide the desired solids level in the redispersed slurry.

In accordance with the present invention, the high solids, i.e. 75% to 78% by weight solids content, purified calcium carbonate slurry 15 is subjected to a staged media grinding operation wherein the particle size of the grinding media becomes progressively finer from stage to stage in the direction of flow of the slurry in series through the multiple grinding stages. Although any number of grinding stages greater than one may be used, three stages of grinding would be typical. In any case, the upstream-most of the grinding stages is charged with the coarsest grinding media and each downstream grinding stage is charged with a grinding media having a particle size at least as fine, and preferably finer, than the particle size of the grinding media of the preceding upstream grinding stage, with the downstream-most of the grinding stages being charged with the finest grinding media.

In the preferred mode for carrying out the beneficiation process of the present invention as illustrated in the drawing, the high solids, purified calcium carbonate slurry is passed in series through three staged media grinders 60, 70 and 80. In accordance with the present invention, the upstream-most media grinder 60 is charged with the coarsest grinding media in the series, the downstream-most media grinder 80 is charged with the finest grinding media in the series, and the intermediate media grinder 70 is charged with a grinding media having a particle size at least as small as and preferably smaller than the grinding media of the upstream grinder 60 but larger than the grinding media of the downstream grinder 80. In commercial practice, the upstream grinder 60 would typically be charged with grinding media having a particle size on the order 3 millimeters, the intermediate grinder 70 would typically be charged with grinding media having a particle size on the order of 2 millimeters, and the downstream grinder 80 would typically be charged with grinding media having a particle size on the order of 1 millimeter. It is presently contemplated that the grinding media comprise grinding bodies of alumina, or alumina/silica, or zirconia/silica, although it is to be understood that the process of the present invention is not limited as to the particular type of grinding material used.

As a final step in producing a filler grade calcium carbonate slurry in accordance with the present invention, the finely ground calcium carbonate slurry 17 output from the downstream-most grinder 80 is passed through a screening apparatus 90 to degrit the slurry, i.e. to remove therefrom any relatively large particles which would adversely increase the abrasiveness of the product slurry 19 including particles of worn grinding media which may be produced in the multistage grinding process. In typical commercial application, the screening apparatus 90 would be designed to screen out substantially all particles in excess of 400 mesh. The underflow slurry 19 from the screening apparatus 90 constitutes a commercial filler grade calcium carbonate product having a solids content of at least 75% by weight, which is, therefore, readily shippable without further dewatering. Additionally, as a result of the multi-stage grinding aspect of the process of the present invention, the product slurry 19 from the screening apparatus 90 will have a narrower particle size distribution and a lower abrasiveness than typical filler grade calcium carbonate slurries produced by conventional prior art beneficiation of naturally-occurring calcite ores, as the typical filler grade calcium carbonate slurry product 19 produced in accordance with the process of the present invention will have a particle size distribution of

C850880

substantially 100% minus 400 mesh (about 35 microns) with at least 30% (sedimentation basis) of the solids by weight therein having an equivalent spherical diameter less than 1 micron.

In a further aspect of the present invention, the underflow slurry 19 from the degritting screening apparatus 90 may be subjected to an additional post-screening grinding step to produce a commercial coating grade calcium carbonate product slurry. If the beneficiated calcium carbonate slurry produced in accordance with the present invention is to be used for paper coating applications, rather than as a paper filler, the underflow slurry 19 from the degritting screening apparatus 90 is passed through an additional media grinder 100 charged with a grinding media consisting of grinding bodies having a particle size at least as fine as the grinding media of the downstream-most grinder 80 of the staged media grinders disposed upstream of the degritting screening apparatus 90. The product slurry 21 from the post-screening grinder 100 constitutes a commercial coating grade calcium carbonate product having a solids content of at least 75% by weight, which is, therefore, as the filler grade product slurry 19, readily shippable without further dewatering. Further, the product slurry 21 will have a narrower particle size distribution and a lower abrasiveness than typical coating grade calcium carbonate slurries produced by conventional prior art beneficiation of naturally-occurring calcite ores, as the typical coating grade calcium carbonate slurry product 21 produced in accordance with the process of the present invention will have a particle size distribution of substantially 100% minus 400 mesh with at least 65% (sedimentation basis) of the solids by weight therein having an equivalent spherical diameter less than 1 micron.

A comparison of typical filler grade and coating grade calcium carbonate products produced in a pilot production run in accordance with the process of the present invention to a commercially available filler grade and coating grade calcium carbonate product is presented in Table I. Presented therein is the particle side distribution, the Elrepho brightness, the percent acid insolubles, and the Einlehner abrasion for each of the four products. A Leeds & Northrup Microtrac Small Particle Analyser was used to measure the particle size distribution as a cumulative precent finer than a given particle size. Acid insolubles where measured using hot 2.4N hydrochloric acid as the treating acid. Brightness and abrasiveness were measured via the standard laboratory procedures. Reference will now be made to the following Table I.

## TABLE I

| | Filler Grade Calcium Carbonate | | Coating Grade Calcium Carbonate | |
|---|---|---|---|---|
| | Hydrocarb 30 | Pilot Process | Hydrocarb 65 | Pilot Process |
| Elrepho Brightness | 96.0 | 96.6 | -- | 96.5 |
| Acid Insolubles, % | 0.4 | 0.2 | -- | 0.2 |
| Einlehner Abrasion, mg loss | 22 | 16 | 14 | 13 |
| Particle Size, Distribution, % finer than | | | | |
| 0.2 micron | 0 | 0 | 0.2 | 0.5 |
| 0.4 micron | 1.4 | 1.7 | 5.7 | 5.8 |
| 1.0 micron | 16.1 | 18.4 | 39.4 | 41.8 |
| 2.6 microns | 41.7 | 46.3 | 82.0 | 86.2 |
| 5.3 microns | 72.3 | 76.1 | 99.7 | 100 |
| 10.6 microns | 96.3 | 96.2 | 100 | -- |

-13-

As can be seen in Table I, both products produced by the pilot process in accordance with the present invention are superior in brightness, lower in acid insolubles, lower in abrasiveness and finer in particle size distribution than the commercially available products. Hydrocarb 30 is a filler grade calcium carbonate product of Omya Incorporated, Procter, Vermont, which has a particle size distribution (sedimentation basis) of 30% less than 1 micron. Hydrocarb 65 is a coating grade calcium carbonate product of Omya Incorporated, Procter, Vermont, which has a particle size distribution (sedimentation basis) of 65% less than 1 micron. Although the standard technique typically used in the industry to measure particle size in calcium carbonate is sedimentation, typically by sedigraph, it should be noted that the particle size distribution measurements in Table I were not obtained by sedimentation but rather by using the Microtrac small particle analyser. Therefore, the exact values in Table I are not indicative of the particle size distribution in the product slurries measured on a sedimentation basis, the values do effectively illustrate the comparatively finer and narrower particle size distribution in the calcium carbonate products produced in accordance with the present invention when compared to the commercially available calcium carbonate products.

0216002

-15-

CLAIMS

1. A process for beneficiating natural calcite ore including the steps of subjecting an aqueous slurry of ground calcite ore to a froth flotation so as to remove acid insoluble impurities therefrom with the froth, dewatering the underflow slurry from the from flotation to a high solids content, and wet grinding the dewatered underflow slurry to produce a beneficiated calcite slurry, characterized by:

subjecting the dewatered underflow slurry to a multistage media grinding process at a solids content of at least 75% by weight by passing the slurry in series from an upstream grinding stage through at least one downstream grinding stage, each downstream grinding stage charged with a grinding media having a particle size finer than the particle size of the grinding media of the preceding upstream grinding stage; and

screening the ground product slurry to remove any grit including worn grinding media produced in the grinding process thereby providing a beneficiated calcite slurry having a solids content of at least 75% by weight wherein at least 30% by weight of the solids therein have an equivalent spherical diameter less than one micron.

2. A process for beneficiating natural calcite ore as recited in Claim 1 further characterized in that the aqueous slurry of ground calcite ore is subjected to froth flotation at a solids content in the range of 45% to 50% by weight.

3. A process for beneficiating natural calcite ore as recited in Claim 1 further characterized in that the aqueous slurry is prepared of ground calcite ore having a particle size range of 90% to 100% minus 100 mesh.

4. A process for beneficiating natural calcite ore are recited in Claim 1 further characterized in that the step of dewatering the underflow slurry from the froth flotation comprises first dewatering the underflow slurry from the froth flotation to a solids content in the range of 80% to 90% by

C850880

weight and then reslurrying the dewatered slurry to a solids content in the range of 75% to 78% by weight by adding an aqueous solution of a dispersing agent to the dewatered slurry.

5. A process for beneficiating natural calcite ore as recited in Claim 4 further characterized in that the aqueous solution of a dispersing agent comprises a solution of a water-soluble polyacrylate dispersant and water.

6. A process for beneficiating natural calcite ore as recited in Claim 5 further characterized in that the polyacrylate dispersant is added to the dewatered slurry at a dosage rate of about 10 to about 30 pounds of dry polyacrylate dispersant per ton of dry calcium carbonate.

7. A process for beneficiating natural calcite ore as recited in Claim 1 further characterized by the step of conditioning the aqueous slurry of ground calcite ore prior to flotation, said conditioning step comprising:

a. first adding an acetate salt of a tall oil based imidazoline to the aqueous slurry of ground calcite ore; and

b. thence mixing a nonpolar hydrocarbon oil into the imidazoline treated aqueous slurry of ground calcite ore and stirring the treated slurry sufficiently to thoroughly condition the calcite slurry with the nonpolar hydrocarbon oil.

8. A process for beneficiating natural calcite ore as recited in Claim 7 characterized in that the acetate salt of the tall oil based imidazoline is added to the calcite slurry at a treatment level of about one pound per ton of dry calcite ore and the nonpolar hydrocarbon oil comprises kerosene which is mixed with the imidazoline treated calcite slurry at a treatment level of about three pounds per ton of dry calcite ore.

9. A process for beneficiating natural calcite ore as recited in Claim 1 further characterized by the step of passing the degritted slurry through an additional media grinding stage charged with a grinding media having a particle size at least as fine as the particle size of the grinding media in the last grinding stage prior to screening to produce a beneficiating calcite slurry having a solids content of at least 75% by weight wherein at least 65% by weight of the solids therein have an equivalent spherical diameter less than one micron.

1/1

WATER

CALCITE